(19) Europäisches Patentamt
European Patent Office
Office européen des brevets

(11) **EP 3 611 466 B1**

(12) **EUROPEAN PATENT SPECIFICATION**

(45) Date of publication and mention
of the grant of the patent:
**31.03.2021 Bulletin 2021/13**

(51) Int Cl.:
*G01B 21/04* (2006.01)   *G01B 11/16* (2006.01)
*G01B 11/26* (2006.01)   *G01B 11/00* (2006.01)
*B25J 19/02* (2006.01)   *B25J 13/08* (2006.01)
*G05B 19/00* (2006.01)

(21) Application number: **18189365.2**

(22) Date of filing: **16.08.2018**

(54) **LASER SPECKLE ROTATIONAL AND STRAIN ENCODERS USED FOR PRECISE POSITIONING OF ROBOTS WITH ARTICULATED ARMS**

LASER-SPECKLE VEFORMUNGS- UND ROTATIONSGEBER FÜR DIE PRÄZISE POSITIONIERUNG EINES GELENKARMROBOTERS

CODEUR OPTIQUE DE ROTATION ET DÉFORMATION UTILISANT LA GRANULATION PRODUITE PAR LASER, POUR LE POSITIONNEMENT D'UN ROBOT À BRAS ARTICULÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.02.2020 Bulletin 2020/08**

(73) Proprietor: **National Chung Shan Institute of Science and Technology**
**Taoyuan City 325 (TW)**

(72) Inventors:
• **HWANG, Yi-Yuh**
**Taipei City 116 (TW)**
• **CHANG, Wei-Guo**
**Taoyuan City 330 (TW)**
• **LIU, Li-Chung**
**Taoyuan City 320 (TW)**

(74) Representative: **DTS Patent- und Rechtsanwälte Schnekenbühl und Partner mbB**
**Marstallstrasse 8**
**80539 München (DE)**

(56) References cited:
**WO-A1-91/19169      US-A- 4 606 696**
**US-A1- 2016 110 628      US-A1- 2018 178 339**

• **ICHIROU YAMAGUCHI ET AL: "LINEAR AND ROTARY ENCODERS USING ELECTRONIC SPECKLE CORRELATION", OPTICAL ENGINEERING, SOC. OF PHOTO-OPTICAL INSTRUMENTATION ENGINEERS, BELLINGHAM, vol. 30, no. 12, 1 December 1991 (1991-12-01), pages 1862-1868, XP000240908, ISSN: 0091-3286**

## Description

TECHNICAL FIELD

The present disclosure relates to three-dimensional displacement measurement methods, and more particularly to a three-dimensional displacement measurement method for laser speckle images and a robotic arm positioning error compensation device operable by the same.

RELATED ART

The structure of a conventional robotic arm is based on an open-loop formed of a series of links connected by rotational joints. The open-loop complicates kinematic analyses and static analyses of the robotic arm. A positional relationship between two adjacent links in a coordinate system, a relationship between a posture of the end-effector and joint variables and a relationship between a force of the end-effector and a driving torque of each joint are very complicated and thus need to be simplified.

On condition that speed and torque control are ignored, it is necessary to find the forward and inverse kinematics of the robotic arm first in order for the robotic arm to switch freely between the Cartesian coordinate system and the joint coordinate system. The forward kinematics uses an angle of rotation of each shaft of the robotic arm to estimate a position of a working point in the three-dimensional space and a direction vector of the end-effector. The inverse kinematics, in turn, uses the three-dimensional spatial coordinates and directions to reversely estimate rotation parameters of each shaft.

Commercialized, existing robotic arms are controlled by parametric kinematics. However, errors of each component in the manufacture of the robotic arms are variable. Furthermore, errors arising from the assembly process of the robotic arms cannot be evaluated by any conventional measurement techniques. Errors caused by these two factors lead to discrepancies between the position and direction of the predictive control of the end-effector of the robotic arm and the position and direction which the robotic arm is actually driven to.

Definition errors of a conventional robotic arm roughly fall into two categories: geometric errors and non-geometric errors. The forward kinetics of the robotic arm is a conversion relationship between the parameters of shafts of the robotic arm and the position and direction of the end-effector of the robotic arm and the conversion relationship is obtained by multiplying homogeneous transformation matrix between each link and the coordinate system. The homogeneous transformation matrix is usually expressed by Denavit-Hartenberg parameters.

Causes of geometric errors include the error of the link parameters, the error between the reference coordinate system and the actual coordinate system, and the non-parallelism of the robotic joint axis of the robotic arm. By contrast, non-geometric errors include gear backlash, bending and torsion of joints and links, thermal deformation and gearing errors. Therefore, it is important to enhance the positioning precision of the conventional robotic arm, regardless of whether a definition error of the conventional robotic arm is a geometric error or a non-geometric error.

Since the errors of the robotic arm operating at different positions in a working area are different, simple compensation can only be achieved by performing absolute correction rather than performing precision correction repeatedly. An absolute correction compensation method based on physical measurement entails compensating and correcting the absolute positioning of the end-effector of the robotic arm directly, so as to effectively improve the precision in the positioning of the end-effector of the robotic arm.

US 2018/178339 refers to a measurement, calibration and compensation system for machine tool includes a first positioning base; two first speckle image sensors for sensing speckle positions of an object holding unit at a first XY plane and a first XZ plane of the first positioning base before and after the machine tool is started for machining; a second positioning base; two second speckle image sensors for sensing speckle positions of a cutter holding unit at a second XY plane and a second YZ plane of the second positioning base before and after the machine tool is started for machining. Thus, the thermal expansion at all axes of the machine tool can be measured in a simplified and low-cost way, and the absolute positioning coordinates of all axes of the machine tool can be calibrated in real time to avoid reduced positioning accuracy due to the thermal expansion of the multi-axis machine tool.

US 4,606,696 discloses mechanism to determine position and orientation in space of a robot linkage or the like. The mechanism typically includes a plurality of structural beams that form the linkage and each structural beam has an associated measuring beam which, in the preferred embodiment, is housed within the structural beam in a way that deflection of the structural beam does not impose loads on the measuring beam. Angular measuring devices and linear measuring devices serve to locate endpoints of the measuring beam and the information derived serves to locate the free end or endpoint (typically a gripper or the like) relative to an anchor to establish position and orientation at the endpoint.

US 2016/110628 discloses a precision calibration method for being applied in a high-precise rotary encoder system, wherein the primary technology feature of the precision calibration method is that: using a laser speckle image capturing module to capture N frames of laser speckle image from an optical position surface of a rotary encoding body, and then using image comparison libraries and particularly-designed mathematical equations to calculate N number of image displacements, so as to eventually calculate N number of primary variation angles and sub variation angles corresponding to the N frames of laser speckle image. Therefore, after the rotary encoding body is rotated by an arbitrary angle, an immediate angle coordinate can be precisely positioned according to the primary variation angles, the secondary variation angles and the N number of image displacements.

ICHIROU YAMAGUCHI ET AL, "LINEAR AND ROTARY ENCODERS USING ELECTRONIC SPECKLE CORRELATION", OPTICAL ENGINEERING, SOC. OF PHOTO-OPTICAL INSTRUMENTATION ENGINEERS, BELLINGHAM, (19911201), vol. 30, no. 12, ISSN 0091-3286, pages 1862 - 1868, XP000240908, describes that speckle patterns can be used as natural surface markings that are printed by the high coherence of laser light. Speckle displacement caused by linear or rotary motion of a surface is detected with a linear image sensor whose output is analyzed by real-time correlator. By using an image sensor of 1/100 deg have been attained. The main advantages of the encoders are extreme simplicity in optical configurations and wide ranges of measurement.

WO 91/19169 A1 discloses a system where beams of laser light are directed onto the surface of a rotary shaft at points spaced longitudinally along the shaft from one another. Light backscattered by the optically rough surface of the shaft is detected by means of detectors which produce output signals related to the detected intensity. Signal-processing means associated with each beam include memory means for storing a reference waveform. The signal-processing means provide a signal indicative of the phase of the detected intensity relative to a reference waveform stored in the memory means. A comparator compares the output signals from the signal-processing means to provide an indication of torque transmitted through the shaft. Alternatively, a single beam and detector may be used to give an indication of angular position of the shaft.

SUMMARY

The present invention is defined by the independent claims. Preferred embodiments are subject-matter of the dependent claims. In view of the above disadvantages of the prior art, the main objective of the present disclosure is to provide a three-dimensional displacement measurement method for laser speckle images, comprising the steps of: (1) emitting a first coherent light and a second coherent light; (2) obtaining a first laser speckle image and a second laser speckle image, wherein the first coherent light is incident on a first surface of a working object and scatters to generate a first laser speckle and the first laser speckle is recorded to obtain the first laser speckle image, and the second coherent light is incident on a second surface of the working object that is perpendicular or adjacent to the first surface and scatters to generate a second laser speckle and the second laser speckle is recorded to obtain the second laser speckle image; (3) repeating the step (2) when the working object moves, wherein a third laser speckle image is obtained according to the first laser speckle and a fourth laser speckle image is obtained according to the second laser speckle, and the first laser speckle image is compared with the third laser speckle image to determine a shift direction and a shift distance of the first surface and the second laser speckle image is compared with the fourth laser speckle image to determine a shift direction and a shift distance of the second surface; (4) determining a three-dimensional displacement of the working object by measuring the shift direction and the shift distance of the first surface of the working object and the shift direction and the shift distance of the second surface of the working object. The three-dimensional displacement measurement method of the present disclosure provides an absolute correction compensation method by physical measurement method for correcting and compensating an absolute positioning of the end-effector of the robotic arm directly in order to effectively improve positioning precision of the end-effector of the robotic arm.

In order to achieve the above objective, according to an aspect of the present disclosure, a three-dimensional displacement measurement method for laser speckle images is provided and comprises the steps of: (1) emitting a first coherent light and a second coherent light; (2) obtaining a first laser speckle image and a second laser speckle image, wherein the first coherent light is incident on a first surface of a working object and scatters to generate a first laser speckle and the first laser speckle is recorded to obtain the first laser speckle image, and the second coherent light is incident on a second surface of the working object that is perpendicular or adjacent to the first surface and scatters to generate a second laser speckle and the second laser speckle is recorded to obtain the second laser speckle image; (3) repeating the step (2) when the working object moves, wherein a third laser speckle image is obtained according to the first laser speckle and a fourth laser speckle image is obtained according to the second laser speckle, and the first laser speckle image is compared with the third laser speckle image to determine a shift direction and a shift distance of the first surface and the second laser speckle image is compared with the fourth laser speckle image to determine a shift direction and a shift distance of the second surface; (4) determining a three-dimensional displacement of the working object by measuring the shift direction and the shift distance of the first surface of the working object and the shift direction and the shift distance of the second surface of the working object.

Since a fully coherent light source (light source with single point and single wavelength) is still not available, the coherent light mentioned in the present disclosure refers to a light source having high coherence. Therefore, the light source has a long coherence length, and the light source can be implemented by a Vertical Cavity Surface Emitting Laser (VCSEL), an Edge Emission Laser (EEL), and a high-coherence gas laser, a high-coherence solid-state laser or laser diodes with high coherence by emitting narrow-band light.

The first laser speckle is the laser speckle generated by the first coherent light that incident on the first surface of the working object and scattered. The first laser speckle may also refer to a laser speckle that is scattered by the first coherent light incident on the first surface of the working object when the working object moves. Similarly, the second laser speckle may also refer to a laser speckle that is scattered by the second coherent light incident on the second surface of the working object when the working object moves.

The three-dimensional displacement measurement method for laser speckle images of the present disclosure is applied to a robotic arm positioning error compensation device, and the device has a first robotic arm, two first light sources, two first image sensors and a first signal processing component. The first light sources emit the first coherent light and the second coherent light. The first coherent light and the second coherent light are incident on the first robotic arm to generate the first laser speckles and the second laser speckles. The first image sensor records the first laser speckles and the second laser speckles to generate the first laser speckle images, the second laser speckle images, the third laser speckle images and the fourth laser speckle images. The first signal processing component processes the first laser speckle images, the second laser speckle images, the third laser speckle images and the fourth laser speckle images to determine the three-dimensional displacement of the first robotic arm.

The robotic arm positioning error compensation device according to the present disclosure further has a first bracket module disposed around the first robot arm, one end of the first bracket module is provided with the first light sources and the first image sensors, and the other end of the first bracket module is provided with two second light sources and two second image sensors. The second light sources emit the first coherent light and the second coherent light. The first coherent light and the second coherent light are incident on the first robotic arm to generate the first laser speckles and the second laser speckles. The second image sensors record the first laser speckles and the second laser speckles to generate the first laser speckle images, the second laser speckle images, the third laser speckle images and the fourth laser speckle images. The first signal processing component processes the first laser speckle images, the second laser speckle images, the third laser speckle images and the fourth laser speckle images to determine the three-dimensional displacement of the other end of the first robotic arm.

Regarding the robotic arm positioning error compensation device according to the present disclosure, a material of the first bracket module is an invar, a super invar, a zero thermal expansion glass-ceramics or other material with a low thermal expansion coefficient.

Regarding the robotic arm positioning error compensation device according to the present disclosure, the first robotic arm is a cuboid, a cylinder or a semi-cylinder.

According to one aspect of the present disclosure, a three-dimensional displacement measurement method for laser speckle images is provided, and the step comprises: (1) emitting a first coherent light and a second coherent light; (2) obtaining a first laser speckle image and a second laser speckle image, wherein the first coherent light is incident on a first surface of a working object and scatters to generate a first laser speckle and the first laser speckle is recorded to obtain the first laser speckle image, and the second coherent light is incident on a second surface of the working object that is perpendicular or adjacent to the first surface and scatters to generate a second laser speckle and the second laser speckle is recorded to obtain the second laser speckle image; (3) repeating the step (2) when the working object moves, wherein a third laser speckle image is obtained according to the first laser speckle and a fourth laser speckle image is obtained according to the second laser speckle, and the first laser speckle image is compared with the third laser speckle image to determine a shift direction and a shift distance of the first surface and the second laser speckle image is compared with the fourth laser speckle image to determine a shift direction and a shift distance of the second surface; (4) repeating the step (3) to generate a laser speckle group, and generating a laser speckle image database according to the laser speckle group and related position information of the first surface and the second surface; (5) repeating the step (2) and comparing the first laser speckle image and the second laser speckle image with the laser speckle image database to obtain the related position information of the first surface and the second surface for determining the three-dimensional position of the working object.

The three-dimensional displacement measurement method for laser speckle images of the present disclosure is applied to a robotic arm positioning error compensation device, and the device has a second robotic arm, two third light sources, two third image sensors and a second signal processing component. The third light sources emit the first coherent light and the second coherent light. The first coherent light and the second coherent light are incident on the second robotic arm to generate the first laser speckles and the second laser speckles. The third image sensors record the first laser speckles and the second laser speckles to generate the first laser speckle images, the second laser speckle images, the third laser speckle images and the fourth laser speckle images. The second signal processing component processes the first laser speckle images, the second laser speckle images, the third laser speckle images and the fourth laser speckles and moves the second robotic arm to create the laser speckle image database. After moving the second robotic arm, the second signal processing component compares the first laser speckle images and the second laser speckle images with the laser speckle image database for determining the three-dimension position of the second robotic arm.

The first laser speckle is the laser speckle generated by the first coherent light that incident on the first surface of the working object and scattered. The first laser speckle may also refer to a laser speckle that is scattered by the first coherent light incident on the first surface of the working object when the working object moves. Similarly, the second laser speckle may also refer to a laser speckle that is scattered by the second coherent light incident on the second surface of the working object when the working object moves.

A secondary robotic arm positioning error compensation device has a light source and an image sensor. Therefore, a robotic arm positioning error compensation device can be implemented by two secondary robotic arm positioning error compensation device and a signal processing component.

The term "moving" or "move" as used in the present disclosure refers to changing the original position or direction. Therefore, the term may refer to the movement or rotation of the object, such as moving the robot arm, rotating the shaft of the robot arm, and the like.

The robotic arm positioning error compensation device according to the present disclosure further has a second bracket module disposed around the second robot arm. One end of the second bracket module is provided with the third light sources and the third image sensors, and the other end of the second bracket module is provided with two fourth light sources and two fourth image sensors. The fourth light sources emit the first coherent light and the second coherent light. The first coherent light and the second coherent light are incident on the second robotic arm to generate the first laser speckles and the second laser speckles. The fourth image sensors record the first laser speckles and the second laser speckles to generate the first laser speckle images, the second laser speckle images, the third laser speckle images and the fourth laser speckle images. The second signal processing component processes the first laser speckle images, the second laser speckle images, the third laser speckle images and the fourth laser speckle images and moves the second robotic arm to create the laser speckle image database. After the second robotic arm is moved, the second signal processing component compares the first laser speckle images and the second laser speckle images with the laser speckle image database for determining the three-dimensional position of the second robotic arm.

Regarding the robotic arm positioning error compensation device according to the present disclosure, a material of the first bracket module is an invar, a super invar, a zero thermal expansion glass-ceramics or other material with a low thermal expansion coefficient.

Regarding the robotic arm positioning error compensation device according to the present disclosure, the first robotic arm is a cuboid, a cylinder or a semicylinder.

## BRIEF DESCRIPTION OF THE DRAWINGS

FIG. 1 is a flow chart diagram of a three-dimensional displacement measurement method for laser speckle images according to an embodiment of the present disclosure;

FIG. 2 is a schematic diagram of the robotic arm positioning error compensation device according to an embodiment of the present disclosure;

FIG. 3 is a schematic diagram illustrative of a movement of a laser speckle of the three-dimensional displacement measurement method for laser speckle images according to the present disclosure;

FIG. 4 is a schematic diagram of a robotic arm positioning error compensation device according to another embodiment of the present disclosure;

FIG. 5 is a schematic diagram of a robotic arm positioning error compensation device according to another embodiment of the present disclosure;

FIG. 6 is a flow chart diagram of the three-dimensional displacement measurement method for laser speckle images according to an embodiment of the present disclosure;

FIG. 7 is a schematic diagram of a robotic arm positioning error compensation device according to another embodiment of the present disclosure;

FIG. 8 is a partial enlarged diagram of a first shaft of the robotic arm positioning error compensation device of the embodiment according to the present disclosure;

FIG. 9 is a partial enlarged diagram of a second shaft of the robotic arm positioning error compensation device of the embodiment according to the present disclosure; and

FIG. 10 is a partial enlarged diagram of a first arm of the robotic arm positioning error compensation device of the embodiment according to the present disclosure.

## DETAILED DESCRIPTION OF THE PREFERRED EMBODIMENTS

To make it easier for the examiner to understand the objectives, characteristics and effects of this present disclosure, embodiments, accompanying drawings and detailed description of the present disclosure are herein provided.

An undistorted laser speckle-image captured device uses a non-specular reflection two-dimensional laser speckle image captured device to measure the laser speckle at a position where a scattering angle and a reflection angle are about 10 degrees apart, and introduces an aperture to limit an incident angle of view of a scattered light of an illuminated surface into two-dimensional image sensors, (i.e., limits an imaging range of an object plane). Parameters of a laser speckle size, a focal length of an imaging lens, an imaging angle and an object plane imaging range are properly integrated, a laser speckle path corresponding to a variable of an optical path difference $\dfrac{4\delta d}{\gamma}\cos^3\theta_A$ is less than $\lambda/5$ when the laser speckle moves. $\delta$ is an average laser speckle size, $\theta_A$ is the imaging angle that is an included angle between a normal line of the object plane and an optical axis of the imaging lens, d is the object plane imaging range, $\gamma$ is a vertical distance from the imaging lens to the object plane and $\lambda$ is a wavelength of an incident light. Therefore, a laser speckle image generated on a picture plane is unlikely to be deformed.

An undistorted laser speckle is defined as follows: when the image capture device moves relative to the object plane, the laser speckle on the picture plane also moves, but its shape and intensity hardly change in the course from its appearance in to its disappearance from the imaging range of the two-dimensional image sensors. Since the laser speckle obtained by the laser speckle image capture device does not deform while moving, it is advantageous for precise laser speckle image recognition and positioning. In addition, every variation in three-dimensional texture of the surface of an unpolished object is unique, and thus every undistorted laser speckle image taken of the surface of the unpolished object is also unique. When an imaging area is large enough (for example, equal to or greater than a 0.5 mm $\times$ 0.5 mm imaging range), each of the laser speckle images is determined to be unique after tens of thousands of the laser speckle images are compared. Since each of the laser speckle images of the object plane is unique, each of the laser speckle images can provide an absolute positioning coordinate to a system after the laser speckle images are compared and positioned.

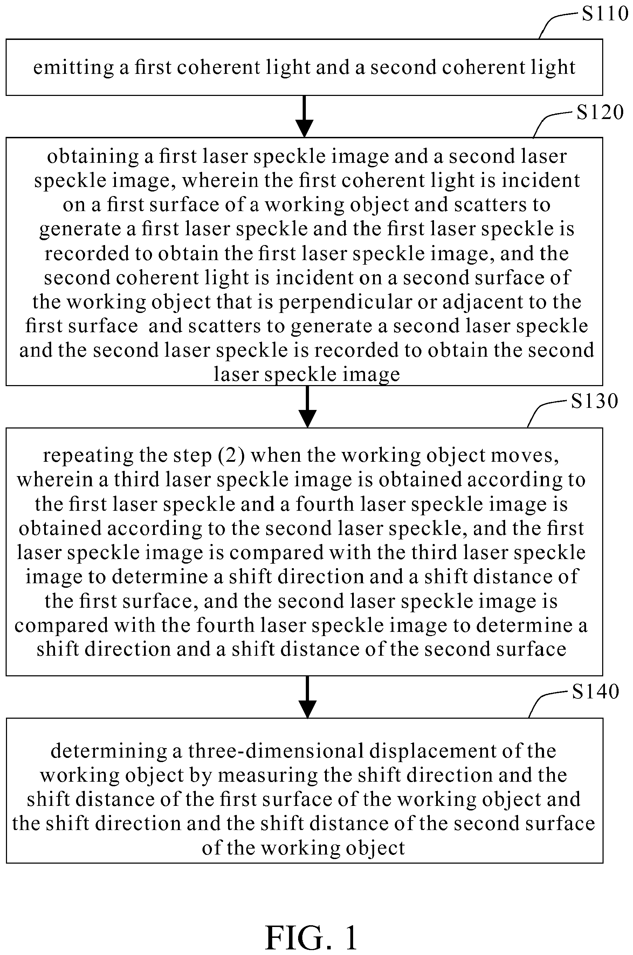

Referring to FIG. 1, there is shown a flow chart diagram of a three-dimensional displacement measurement method for laser speckle images according to an embodiment of the present disclosure. The steps of the three-dimensional displacement measurement method are described below.

In step (1) S110, a first coherent light and a second coherent light are emitted.

In step (2) S120, a first laser speckle image and a second laser speckle image are obtained. The first coherent light is incident on a first surface of a working object and scatters to generate a first laser speckle. The first laser speckle is recorded to obtain a firs laser speckle image. The second coherent light is incident on a second surface of the working object that is perpendicular or adjacent to the first surface, and scatters to generate a second laser speckle, and the second laser speckle is recorded to obtain a second laser speckle image.

In step (3) S130, step (2) is repeated when the working object moves. A third laser speckle image is generated by the first laser speckle, and a fourth laser speckle image is generated by the second laser speckle. The first laser speckle image is compared with the third laser speckle image to determine a shift direction and a shift distance of the first surface, and the second laser speckle image is compared with the fourth laser speckle image to determine the shift direction and the shift distance of the second surface.

In step (4) S140, a three-dimensional displacement of an object is determined by measuring the shift direction and the shift distance of the first surface of the working object and the shift direction and the shift distance of the second surface of the working object.

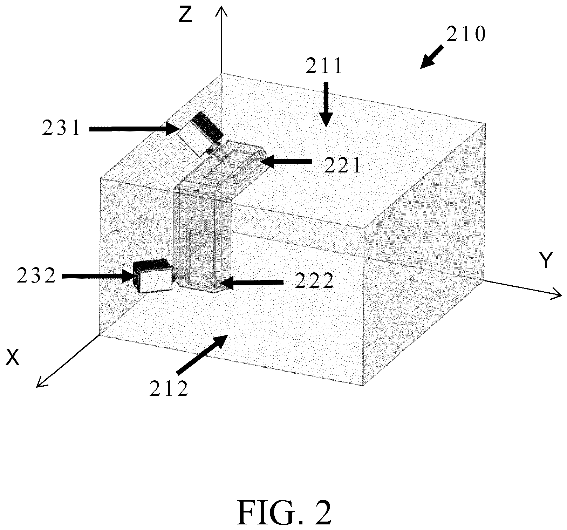

Referring to FIG. 2, there is shown a schematic diagram of the robotic arm positioning error compensation device according to an embodiment of the present disclosure. The robotic arm positioning error compensation device has a robotic arm (210), two light sources (221, 222) and two image sensors (231, 232). A first surface (211) of the robotic arm (210) is adjacent to a second surface (212) of the robotic arm (210). A first secondary light source (221) illuminates the first surface (211) of the robotic arm, and a first secondary image sensor (231) obtains the laser speckle image generated by the first secondary light source (221). Similarly, a second secondary light source (222) illuminates the second surface (212) of the robotic arm, and a second secondary image sensor (232) obtains the laser speckle image generated by the second secondary light source (222). In the embodiment, the robotic arm is cuboid, but the present disclosure is not limited thereto. In a preferred embodiment, two adjacent surfaces of the robotic arm are configured on one side of the robotic arm and perpendicular to each other. In a broader embodiment, any robotic arm having two adjacent surfaces that are not parallel to each other and configured on one side of the robotic arm is suitable for the robotic arm positioning error compensation device according to the present disclosure.

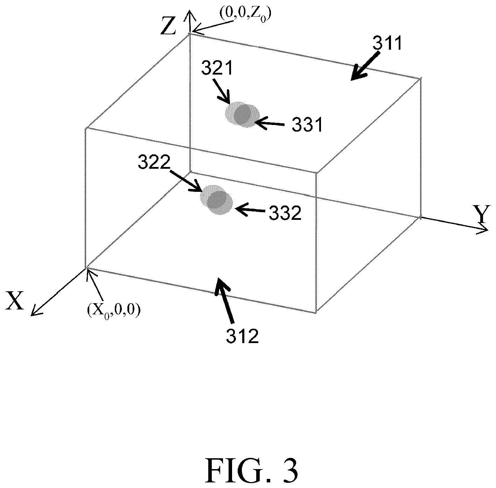

Referring to FIG. 3, there is shown a schematic diagram illustrative of a shift of the laser speckle of the three-dimensional displacement measurement method for the laser speckle image according to the present disclosure. FIG. 3 shows a working object, a first laser speckle image (321), a second laser speckle image (322), a third laser speckle image (331), a fourth laser speckle image (332), and the working object has a first surface (311) and a second surface (312) that are perpendicular or adjacent to each other.

At an initial time $t_1$, images of the laser speckles from the first surface (311) of the coordinate $Z=Z_0$ and

the second surface (312) of the coordinate $X= X_0$ are obtained and recorded. The first laser speckle image (321) is obtained from the first surface (311), and the second laser speckle image (322) is obtained from the second surface (312).

At another time $t_2$, the third laser speckle image (331) is obtained from the first surface (311) and the fourth laser speckle image (332) is obtained from the second surface (312).

A first displacement ($\Delta X$, $\Delta Y$) of the working object in a time interval $\Delta t(t_2-t_1)$ is obtained by comparing the position of the laser speckle in the first laser speckle image (321) with the position of the laser speckle in the third laser speckle image (331). The displacement is a relative displacement between the working object and an observer (usually the observer is an image sensor used to record the laser speckle). Similarly, a second displacement ($\Delta Y$, $\Delta Z$) of the working object in the time interval $\Delta t(t_2-t_1)$ is obtained by comparing the position of the laser speckle in the second laser speckle image (322) with the position of the laser speckle in the fourth laser speckle image (332). A three-dimensional displacement ($\Delta X$, $\Delta Y$, $\Delta Z$) of the working object is obtained by integrating the first displacement and the second displacement.

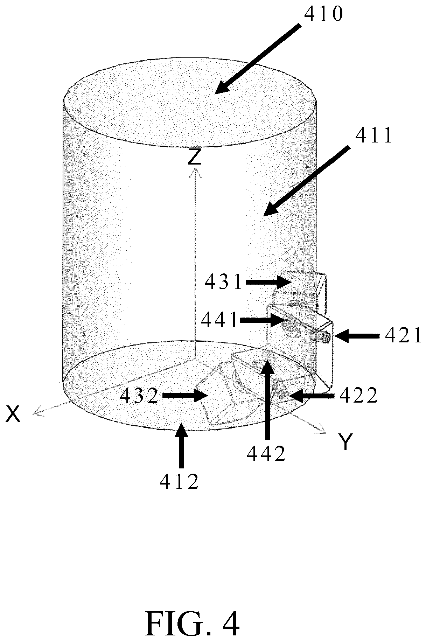

Referring to FIG. 4, there is shown a schematic view of a robotic arm positioning error compensation device according to another embodiment of the present disclosure. The robotic arm positioning error compensation device has a robotic arm (410), two light sources (421, 422) and two image sensors (431, 432). The robotic arm (410) has a first surface (411) adjacent or perpendicular to a second surface (412) of the robotic arm (410). A first secondary light source (421) illuminates the first surface (411) of the robotic arm (410), and a first secondary image sensor (431) obtains a first laser speckle image (441) generated by the first secondary light source (221). Similarly, a second secondary light source (422) illuminates the second surface (412) of the robotic arm (410), and a second secondary image sensor (432) obtains a second laser speckle image (442) generated by the second secondary light source (422). In the embodiment, the robotic arm is cylinder, and a measurement method is cylinder coordinate system or Cartesian coordinate system.

The cylindrical coordinate system (the height is z axis, r axis is perpendicular to z axis, an angle between the X axis and the r axis on the X-Y axis plane is $\theta$ degrees) is as a positioning coordinate in the following descriptions. At an initial time $t_1$, the first laser speckle image (441) is at a position ($Z=h$, $r=R_0$ and $\theta = \theta_1$) of one side, and the second laser speckle image (442) is at a position ($Z=0$, $r=R_1$ and $\theta = \theta_1$) of a bottom. At another time $t_2$, images of the first laser speckle image (441) and the second laser speckle image (442) are obtained and recorded as laser speckle images. A first displacement ($\Delta\theta$, $\Delta z$) of the robotic arm in a time interval $\Delta t(t_2-t_1)$ is obtained by comparing the laser speckle image of the first laser speckle image (441) at time $t_1$ with the laser speckle image of the first laser speckle image (441) at time $t_2$. A

second displacement ($\Delta r$, $\Delta\theta$) of the robotic arm in the time interval $\Delta t(t_2-t_1)$ is obtained by comparing the laser speckle image of the second laser speckle image (442) at time $t_1$ with the laser speckle image of the second laser speckle image (442) at time $t_2$. A three-dimensional relative displacement ($\Delta r$, $\Delta\theta$, $\Delta z$) of the robotic arm is obtained by combining the first displacement and the second displacement, and the three-dimensional relative displacement ($\Delta r$, $\Delta\theta$, $\Delta z$) is able to transfer to relative displacement ($\Delta X$, $\Delta Y$, $\Delta Z$) of the Cartesian coordinate system.

Since displacements of the laser speckles of an image capturing plane aligned in a vertical direction are unable to be recorded by the sensor, the displacement component perpendicular to the sensor device is unable to be sensed. Therefore, one sensor only can measure the displacements of two axes direction.

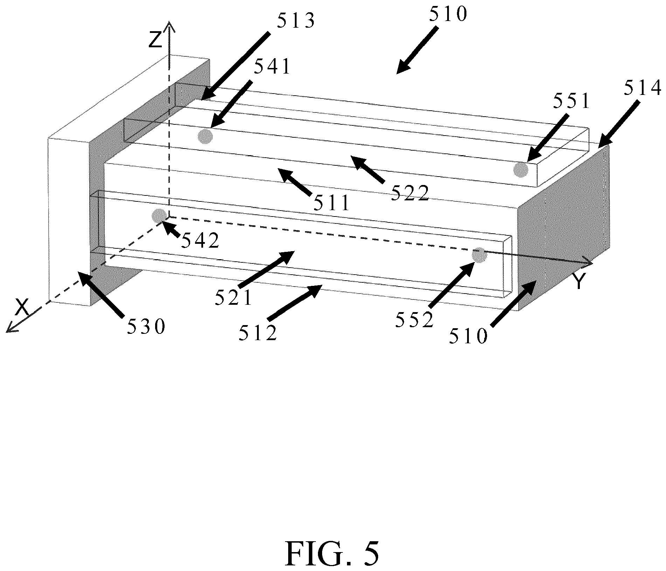

Referring to FIG. 5, there is shown a schematic view of a robotic arm positioning error compensation device according to another embodiment of the present disclosure. Because the robotic arm may be deformed due to excessive load or long-term wear, the deformation of the robotic arm must be measured in order for correction and compensation to be carried out.

FIG. 5 shows a robotic arm positioning error compensation device according to another embodiment of the present disclosure. The robotic arm positioning error compensation device has a robotic arm (510), four light sources, four image sensors, a bracket module and a signal processing component. The robotic arm (510) has a first surface (511) and a second surface (512). The first surface (511) is perpendicular or adjacent to the second surface (512). The bracket module has a first secondary bracket (521) and a second secondary bracket (522). The bracket module is connected to a base (530), but not to the robotic arm (510). The first secondary bracket (521) is disposed on the same side of the first surface (511). The second secondary bracket (522) is disposed on the same side of the second surface (512). A material of the bracket module is an invar (or material such as a super invar or a zero thermal expansion glass-ceramics that has a low thermal expansion coefficient). The bracket module is fixed and strengthened to the bottom of the robotic arm, and each bracket has no load other than two image sensors and two light sources. Since the load of each bracket is light, the first and second secondary brackets (521, 522) can be regarded as no-load device, so as long-term use of the bracket is assured, and the displacement of the relative position between the bracket and the bottom of the robotic arm is less than a system requirements specification.

The four light sources generate four laser speckles image (541, 542, 551, 552). The robotic arm (510) has a first surface (511), a second surface (512), a first end (513) and a second end (514), and the first surface (511) is perpendicular to or adjacent to the second surface (512). A first laser speckle image group (541, 542) is on the first end (513) and the second laser speckle image group (551, 552) is on the second end (514). A first laser speckle image (541) of the first laser speckle image group (541, 542) and a first laser speckle image (551) of the second laser speckle image group (551, 552) are on the first surface (511). A second laser speckle image (542) of the first laser speckle image group (541, 542) and a second laser speckle image (552) of the second laser speckle image group (551, 552) are on the second surface (512). A three-dimensional relative displacement of the first end (513) is obtained by the first laser speckle image group (541, 542) and the three-dimensional displacement measurement method for the laser speckle images. Similarly, a three-dimensional relative displacement of the second end (514) is obtained by the second laser speckle image group (551, 552) and the three-dimensional displacement measurement method for the laser speckle images. Therefore, a degree of deformation of the robotic arm is obtained by the three-dimensional relative displacements between the two ends (513, 514) of the robotic arm.

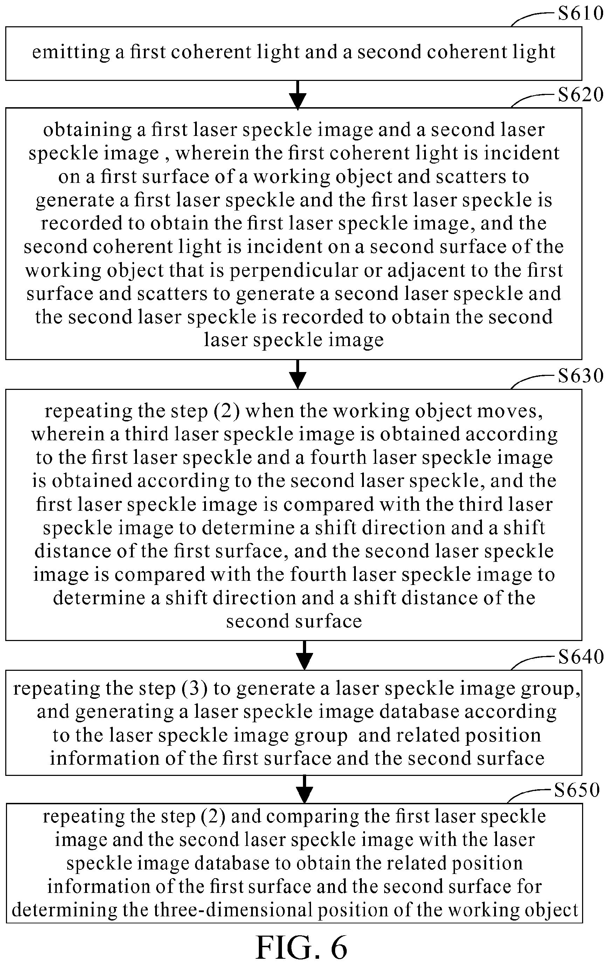

Referring to FIG. 6, there is shown a flow chart diagram of the three-dimensional displacement measurement method for the laser speckle image according to another embodiment of the present disclosure. The steps of the method are described below.

In step (1) S610, a first coherent light and a second coherent light are emitted.

In step (2) S620, a first laser speckle image and a second laser speckle image are obtained. The first coherent light is incident on a first surface of a working object and scatters to generate a first laser speckle. The first laser speckle is recorded to obtain a first laser speckle image. The second coherent light is incident on a second surface of the working object that is perpendicular or adjacent to the first surface and scatters to generate a second laser speckle, and the second laser speckle is recorded to obtain a second lase speckle image.

In step (3) S630, step (2) is repeated when the working object moves. A third laser speckle image is generated by the first laser speckle, and a fourth laser speckle image is generated by the second laser speckle. The first laser speckle image is compared with the third laser speckle image to determine a shift direction and a shift distance of the first surface, and the second laser speckle image is compared with the fourth laser speckle image to determine the shift direction and the shift distance of the second surface.

In step (4) S640, step 3 is repeated to generate a laser speckle image group, and related position information between the laser speckle image group and the first and the second surface are made into a laser speckle image database.

In step (5) S650, the step (2) is repeated. The first laser speckle image and the second laser speckle image are compared with the laser speckle image database for obtaining the related position information of the first surface and the second surface in order to determine a three-dimensional position of the working object.

The three-dimensional positioning measurement method for the laser speckle images is also applicable to the robotic arm positioning error compensation device shown in FIG. 2 to FIG. 5.

In the following descriptions, FIG. 3 illustrates an embodiment of the three-dimensional positioning measurement method for the laser speckle images.

At an initial time $t_1$, images of the lase speckles from the first surface (311) of the coordinate $Z=Z_0$ and the second surface (312) of the coordinate $X=X_0$ are obtained and recorded. The first laser speckle image (321) is obtained from the first surface (311), and the second laser speckle image (322) is obtained from the second surface (312).

At another time $t_2$, the third laser speckle image (331) is obtained from the first surface (311) and the fourth laser speckle image (332) is obtained from the second surface (312).

A first displacement ($\Delta X$, $\Delta Y$) of the working object in a time interval $\Delta t(t_2-t_1)$ is obtained by comparing the position of the laser speckle in the first laser speckle image (321) with the position of the laser speckle in the third laser speckle image (331). The working object is repeatedly moved and the first displacement is repeatedly measured. By measuring the first displacement, a first secondary laser speckle image database is created by the laser speckle image group that corresponds to the two-dimensional position of the first surface (311). Similarly, a second secondary laser speckle image database is created by the laser speckle image group that corresponds to the two-dimensional position of the second surface (312). The first secondary laser speckle image database and the second secondary laser speckle image database are integrated into a laser speckle image database.

After the laser speckle image database is created, it is only necessary to measure the first laser speckle image on the first surface and compare the first laser speckle image with the first secondary laser speckle image database, then measure the first laser speckle image on the second surface and compare the first laser speckle image with the second secondary laser speckle image database, so as to obtain a three-dimensional instant coordinate of the working object. Therefore, by using the three-dimensional positioning measurement method for the laser speckle images, after the laser speckle image database is created, the moving of the working object does not need to be continuously measured, and the working object can be positioned only once.

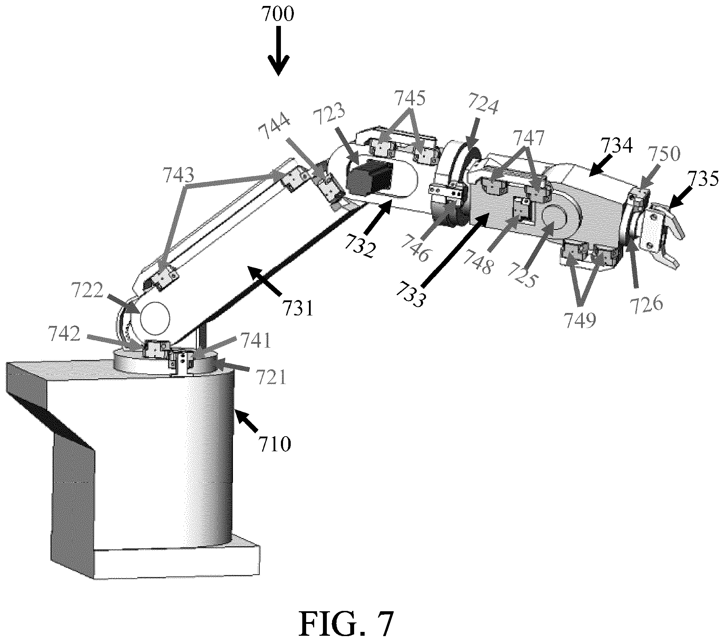

FIGS. 7-10 are schematic diagrams of the robotic arm positioning error compensation device according to another embodiment of the present disclosure. Generally, the multi-axis robotic arm determines a positioning coordinates of the end-effector by a rotation angle parameter of each shaft, but cannot consider deformation variables between each transmission shaft. The deformation variables comprise thermal expansion, heat drift, gear backlash, torsional deformation, wear deformation, etc. In this embodiment, three-dimensional positioning variables between two adjacent transmission shafts and an absolute rotation angle of each shaft are measured by the robotic arm positioning error compensation device of the present disclosure, and are used to sequentially calibrate the absolute positioning coordinates of each transmission shaft corresponding to the base of the robotic arm and up to the positioning coordinate of the end-effector. Since the absolute positioning of actual motion of the laser speckle on the surface of the transmission shaft is utilized, it can be used to correct positioning errors of original rotation angle parameters, thereby obtaining the positioning precision beyond original specification.

In the embodiment, the robotic arm is multi-axis robotic arm (700) and has a base (710), a first shaft (721), a second shaft (722), a third shaft (723), a fourth shaft (724), a fifth shaft (725), a sixth shaft (726), a first arm (731), a second arm (732), a third arm (733), a fourth arm (734), an end-effector (735), a first robotic arm positioning error compensation device (741), a second robotic arm positioning error compensation device (742), a third robotic arm positioning error compensation device (743), a fourth robotic arm positioning error compensation device (744), a fifth robotic arm positioning error compensation device (745), a sixth robotic arm positioning error compensation device (746), a seventh robotic arm positioning error compensation device (747), an eighth robotic arm positioning error compensation device (748), a ninth robotic arm positioning error compensation device (749) and a tenth robotic arm positioning error compensation device (750).

The first shaft (721) is disposed on the base (710) and rotates the second shaft (722), the second shaft (722) rotates the firs arm (731), the first arm (731) drives the third shaft (723), the third shaft (723) rotates the second arm (732), the second arm (732) drives the fourth shaft (724), the fourth shaft (724) rotates the third arm (733), the third arm (733) drives the fifth shaft (725), the fifth shaft (725) rotates the fourth arm (734), the fourth arm (734) drives the sixth shaft (726) and the sixth shaft (726) rotates the end-effector (735).

The first robotic arm positioning error compensation device (741) measures the first shaft (721), the second robotic positioning error compensation device (742) measures the second shaft (722), the third robotic positioning error compensation device (743) measures the first arm (731), the fourth robotic positioning error compensation device (744) measures the third shaft (723), the fifth robotic arm positioning error compensation device (745) measures the second arm (732), the sixth robotic arm positioning error compensation device (746) measures the fourth shaft (724), the seventh robotic arm positioning error compensation device (747) measures the third arm (733), the eighth robotic arm positioning error compensation device (748) measures the fifth shaft (725), the ninth robotic arm positioning error compensation device (749) measures the fourth arm (734), the tenth robotic arm positioning error compensation device (750) measures the sixth shaft (726), and the following descriptions illustrate the operation method by a partial enlarged diagram of the multi-axis robotic arm.

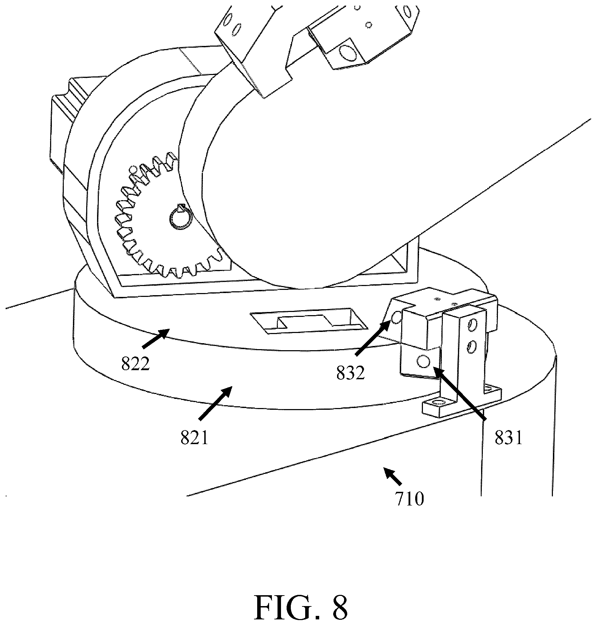

FIG. 8 is a partial enlarged diagram of the first shaft of the robotic arm positioning error compensation device of an embodiment according to the present disclosure. The first robotic arm positioning error compensation device has a first secondary robotic arm positioning error compensation device (831) and a second secondary robotic arm positioning error compensation device (832) that are disposed on a first surface (821) of a first shaft and a second surface (822) of the first shaft respectively. First, the first shaft is rotated one turn to create a laser speckle image database having the first surface (821) of the first shaft and the second surface (822) of the first shaft. Next, a shaft center point on a bottom surface of the base (710) is set as a reference coordinate origin to establish a Cartesian coordinate system and a cylindrical coordinate system. The first shaft is continuously rotated one turn at a small angle interval. Whenever the first shaft rotates once, laser speckle images are captured and recorded at positions of the first secondary robotic arm positioning error compensating device (831) and the second secondary robotic arm positioning error compensating device (832) respectively. And each adjacent laser speckle image is overlapped each other and generates an overlap area greater than 1/2 area of the laser speckle image. A relative displacement of the adjacent laser speckle images is measured by a laser speckle sub-pixel alignment method, such as Scale-invariant feature transform (SIFT), Speeded Up Robust Features (SURF), Sum of Absolute Difference (SAD), Sum of Squared Differences (SSD) or Normalized Cross-Correlation (NCC). The relative displacements of all adjacent laser speckle images are continuously compared, and all the displacements are added and set to a laser speckle image circumference length. Each displacement is divided by the laser speckle image circumference length and multiplied by 360 degrees to obtain the angle between all adjacent laser speckle images. Assuming that the first laser speckle image is 0 degree coordinate laser speckle image, the remaining adjacent laser speckle images sequentially calibrate the coordinate angles with adjacent angles to form a coordinate laser speckle image. Therefore, the laser speckle image database having coordinates is created by rotating the first shaft one turn at two positions of the first secondary robotic arm positioning error compensating device (831) and the second secondary robotic arm positioning error compensating device (832).

After the laser speckle image database is completed, the laser speckle image obtained at other time is called an instant laser speckle image. All coordinate laser speckle images of the laser speckle image database and the instant laser speckle image are used to measure the absolute positioning coordinate of the instant laser speckle image by using the laser speckle sub-pixel alignment method (such as SIFT, SURF, SAD, SSD or NCC) to locate the three-dimensional position of the first shaft. Assume that the absolute positioning coordinate $(X_A, Y_A, h)$ of the instant laser speckle image can be switched from a Cartesian coordinate to a column coordinate $(r_A, \theta_A, h)$, a measured value (the column coordinate $(r_A, \theta_A, h)$) is compared with a rotation angle $\theta_{set}$, a presetting distance $r_{set}$ and a presetting height $Z_{set}$ of forward movement or inverse movement, and differences $(\Delta r = r_A - r_{set}, \Delta\theta = \theta_A - \theta_{set}, \Delta Z = Z_{set} - h)$ between the actual rotation of the first shaft and preset position parameters can be obtained. This three-dimensional difference can be instantly fed back to a servo motor system for immediate positioning correction compensation.

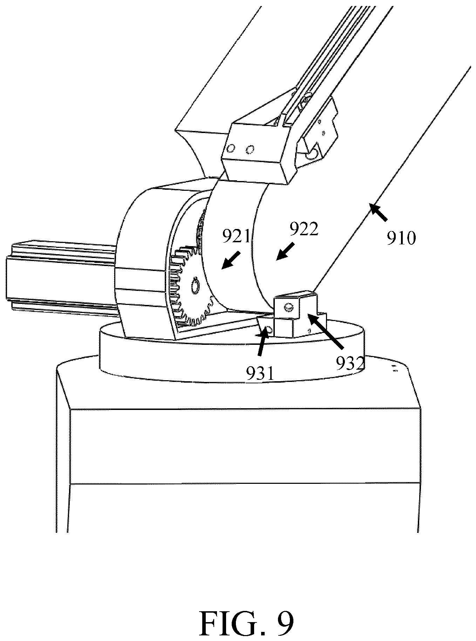

FIG. 9 is a partial enlarged diagram of the second shaft of the robotic arm positioning error compensation device of the embodiment according to the present disclosure. The second robotic arm positioning error compensation device has a third secondary robotic arm positioning error compensation device (931) and a fourth secondary robotic arm positioning error compensation device (932) that are disposed on a first surface (921) of a first arm (910) and a second surface (922) of the first arm (910) respectively. Since the first arm (910) can only be rotated to 180 degrees, the method (360 degrees self-calibration method) as shown in FIG. 8 cannot be used to create the laser speckle image database. As a result, other calibration methods must be used to create the laser speckle image database.

A positioned disc is disposed at a center of the second shaft (722), and is a disc for creating a laser speckle image database of the disc by the three-dimensional positioning measurement method for the laser speckle images of the present disclosure. Therefore, the precise angle of the disc can be obtained by the laser speckle image. A secondary robotic arm positioning error compensation device is mounted on the second surface (822) of the first shaft to obtain the laser speckle image of the disc. The laser speckle image of the disc is compared with the laser speckle image database of the disc, and the rotation angle of the second shaft is obtained. At a small angle interval, the first arm (910) is continuously rotated half a circle (or cover a required range of work). Whenever the first arm (910) rotates once, the laser speckle images are captured and recorded at the positions of the third secondary robotic arm positioning error compensating device (931) and the fourth secondary robotic arm positioning error compensating device (932) respectively. And each adjacent laser speckle image is overlapped each other and generates an overlap area greater than 1/2 area of the laser speckle image. At the same time, the rotation angle is read by the positioning disc, so that the first laser speckle image is the 0 degree coordinate laser speckle image. Then other adjacent laser speckle images can use the rotation angle read by the positioned disc to sequentially calibrate the coordinate angle to become the coordinate laser speckle image. Therefore, the laser speckle image database having coordinates is created by rotating the first arm (910) half a circle (or cover the required range of work) at two positions of the third secondary robotic arm positioning error compensating device (931) and the fourth secondary robotic arm positioning error compensating device (932).

After the laser speckle image database is created, the laser speckle image obtained at other time is an instant laser speckle image. All coordinate laser speckle images of the laser speckle image database and the instant laser speckle image are used to measure the absolute positioning coordinate of the instant laser speckle image by using the laser speckle sub-pixel alignment method (SIFT, SURF, SAD, SSD, NCC, etc.) to locate the three-dimensional position of the first arm. Assume that the absolute positioning coordinate $(X_A, Y_A, h)$ of the instant laser speckle image can be switched from a Cartesian coordinate to a column coordinate $(r_A, \theta_A, h)$, the measured value (column coordinate $(r_A, \theta_A, h)$) is compared with a rotation angle $\theta_{set}$, a presetting distance $r_{set}$ and a presetting height $Z_{set}$ of forward movement or inverse movement, and differences $(\Delta r = r_A - r_{set}, \Delta\theta = \theta_A - \theta_{set}, \Delta Z = Z_{set} - h)$ between the actual rotation of the first arm and preset position parameters can be obtained. The three-dimensional differences can be instantly fed back to the servo motor system for immediate positioning correction compensation. The third shaft, the fourth shaft, the fifth shaft, and the sixth shaft also operate on the same principle, that is, the shaft drives the arm to rotate.

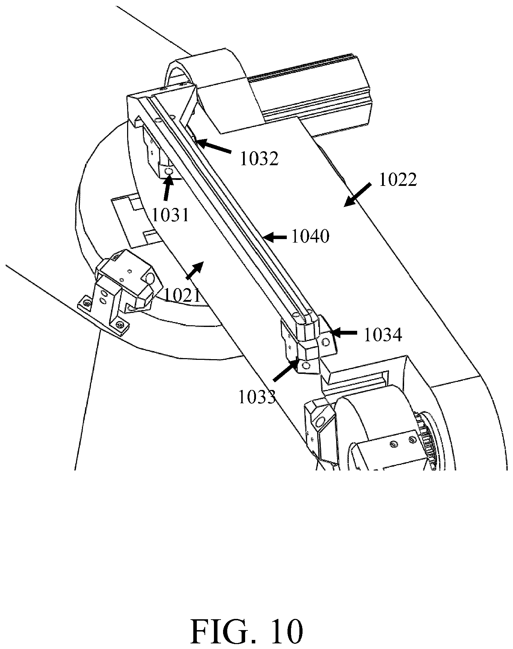

FIG. 10 is a partial enlarged diagram of the first arm of the robotic arm positioning error compensation device of the embodiment according to the present disclosure. The third robotic arm positioning error compensation device (743) has a fifth secondary robotic arm positioning error compensation device (1031), a sixth secondary robotic arm positioning error compensation device (1032), a seventh secondary robotic arm positioning error compensation device (1033) and an eighth secondary robotic arm positioning error compensation device (1034), and the fifth secondary robotic arm positioning error compensation device (1031), the sixth secondary robotic arm positioning error compensation device (1032), the seventh secondary robotic arm positioning error compensation device (1033) and the eighth secondary robotic arm positioning error compensation device (1034) are disposed at two ends of a first bracket (1040) respectively. The fifth secondary robotic arm positioning error compensation device (1031) and the sixth secondary robotic arm positioning error compensation device (1032) are fixed to a front end of the first bracket (1040) and measure the first surface (1021) of the first arm and a second surface (1022) of the first arm, respectively. The seventh secondary robotic arm positioning error compensation device (1033) and the eighth secondary robotic arm positioning error compensation device (1034) are fixed to a rear end of the first bracket (1040) and measure the first surface (1021) of the first arm and the second surface (1022) of the first arm, respectively. The front end of the first bracket (1040) refers to one end near the center of the second shaft (722). In this embodiment, the first bracket (1040) is fixed on the first arm (910) near one end of the second shaft (722) and maintains a certain distance from the surface of the first arm. The first bracket (1040) is made of an invar, a super invar, a zero thermal expansion glass-ceramics or other low thermal expansion materials. The first bracket (1040) is only configured with the third robotic arm positioning error compensation device (743), and has no other load, so the load of the first bracket (1040) is very light (and thus is also known as "no-load bracket.") It can ensure that the displacement of the relative position of the first bracket (1040) is small (inevitably smaller than what is required by the system specification) even after long use.

When the first arm is assembled and corrected, the laser speckles of the four positions of the first arm are captured by the four secondary robotic arm positioning error compensation devices on the first bracket and recorded as coordinate laser speckle images, respectively. The coordinate laser speckle images are further combined with coordinates to create a laser speckle image database.

When the robotic arm is in operation, the laser speckles of the four positions are read at any time, and all the coordinate laser speckle images of the database and the laser speckles are compared and positioned by using the laser speckle sub-pixel alignment method such as SIFT, SURF, SAD, SSD, NCC, and the like. The absolute coordinate displacements between the instant positions and the initial positions of the four positions of the surface of the first arm can be accurately obtained. It is assumed that the fifth secondary robotic arm positioning error compensation device (1031) measures a displacement $(0, \Delta Y_5, \Delta Z_5)$, the sixth secondary robotic arm positioning error compensation device (1032) measures a displacement $(\Delta X_6, \Delta Y_6, 0)$, the seventh secondary robotic arm positioning error compensation device (1033) measures a displacement $(0, \Delta Y_7, \Delta Z_7)$, and the eighth secondary robotic arm positioning error compensation device (1034) measures a displacement $(\Delta X_8, \Delta Y_8, 0)$. The displacement of the seventh secondary robotic arm positioning error compensation device (1034) is subtracted from the displacement of the fifth secondary robotic arm positioning error compensation device (1031) $(\Delta Y = \Delta Y_7 - \Delta Y_5, \Delta Z = \Delta Z_7 - \Delta Z_5)$ to obtain a deformation displacement on the Y-Z plane $(\Delta Y, \Delta Z)$. The displacement of the eighth secondary robotic arm positioning error compensation device (1034) is subtracted from the displacement of the sixth secondary robotic arm positioning error compensation device (1032) $(\Delta X = \Delta X_8 - \Delta X_6, \Delta Y = \Delta Y_8 - \Delta Y_6)$ to obtain a deformation displacement on the X-Y plane $(\Delta X, \Delta Y)$. By integrating the two deformation displacements, the three-dimensional relative displacement variable $(\Delta X, \Delta Y, \Delta Z)$ of the front end and the rear end of the first arm can be obtained, so that a body deformation of the first arm can be obtained. The second arm also operates on the same principle, that is, the degree of arm deformation must be measured.

According to the present disclosure, no matter how many shafts and arms of the robotic arm, the three-dimensional positioning error and the deformation error of all the transmission components from the base of the robotic arm to the end-effector can be measured by relevant error correction parameters, and provided to servo control system for instant positioning absolute compensation correction. Due to the image comparison using the laser speckle images and conventional image processing technique, the positioning error can be smaller than 0.01 pixel size of the image sensor, so a good positioning precision is provided. Moreover, because of the absolute positioning characteristics of the laser speckle image, there has no accumulate correlation errors, so the present disclosure can provide high positioning precision to multi-axis robotic arm.

The three-dimensional displacement measurement method of the present disclosure provides an absolute correction compensation method by physical measurement for correcting and compensating an absolute positioning of the end-effector of the robotic arm directly in order to effectively improve a positioning precision of the end-effector of the robotic arm.

## Claims

1. A three-dimensional displacement measurement method for laser speckle images, comprising the steps of:

   (1) emitting a first coherent light and a second coherent light;
   (2) obtaining a first laser speckle image and a second laser speckle image, wherein the first coherent light is incident on a first surface (211, 311, 411, 511, 821, 921, 1021) of a transmission shaft and scatters to generate a first laser speckle and the first laser speckle is recorded to obtain the first laser speckle image (321), and the second coherent light is incident on a second surface (212, 312, 412, 512, 822, 922, 1022) of the transmission shaft that is perpendicular or adjacent to the first surface (211, 311, 411, 511, 821, 921, 1021) and scatters to generate a second laser speckle and the second laser speckle is recorded to obtain the second laser speckle image (322);
   (3) repeating the step (2) when the transmission shaft moves, wherein a third laser speckle image (331) is obtained according to the first laser speckle and a fourth laser speckle image (332) is obtained according to the second laser speckle, and the first laser speckle image (321) is compared with the third laser speckle image (331) to determine a shift direction and a shift distance of the first surface (211, 311, 411, 511, 821, 921, 1021), and the second laser speckle image (322) is compared with the fourth laser speckle image (332) to determine a shift direction and a shift distance of the second surface (212, 312, 412, 512, 822, 922, 1022); and

(4) determining a three-dimensional displacement of the transmission shaft by measuring the shift direction and the shift distance of the first surface (211, 311, 411, 511, 821, 921, 1021) of the transmission shaft and the shift direction and the shift distance of the second surface (212, 312, 412, 512, 822, 922, 1022) of the transmission shaft, and utilizing the absolute positioning of actual motion of the laser speckle on the surface of the transmission shaft to correct positioning errors of original rotation angle parameters.

2. A robotic arm positioning error compensation device (741-750), configured to execute the three-dimensional displacement measurement method for laser speckle images according to claim 1, the robotic arm positioning error compensation device comprising:

> a first multi-axis robotic arm (210, 410, 510, 700);
> two first light sources (221, 421);
> two first image sensors (231, 431); and
> a first signal processing component;
> wherein the first light sources (221, 421) emit the first coherent light and the second coherent light, the first coherent light and the second coherent light are incident on the first multi-axis robotic arm (210, 410, 510, 700) to generate the first laser speckles and the second laser speckles, the first image sensors record the first laser speckles and the second laser speckles to generate the first laser speckle images (321), the second laser speckle images (322), the third laser speckle images (331) and the fourth laser speckle images (332), and the first signal processing component processes the first laser speckle images (321), the second laser speckle images (322), the third laser speckle images (331) and the fourth laser speckle images (332) to determine the three-dimensional displacement of the first multi-axis robotic arm (210, 410, 510, 700).

3. The robotic arm positioning error compensation device (741-750) according to claim 2, further comprising:

> a first bracket module, disposed around the first multi-axis robot arm, with one end of the first bracket module provided with the first light sources (221, 421) and the first image sensors (231, 431), and the other end of the first bracket module provided with two second light sources (222, 422) and two second image sensors (232, 432),

wherein, the second light sources (222, 422) emit the first coherent light and the second coherent light, the first coherent light and the second coherent light are incident on the first multi-axis robotic arm (210, 410, 510, 700) to generate the first laser speckles and the second laser speckles, the second image sensors (232, 432) record the first laser speckles and the second laser speckles to generate the first laser speckle images (321), the second laser speckle images (322), the third laser speckle images (331) and the fourth laser speckle images (332), and the first signal processing component processes the first laser speckle images (321), the second laser speckle images (322), the third laser speckle images (331) and the fourth laser speckle images (332) to determine the three-dimensional displacement of the other end of the first multi-axis robotic arm (210, 410, 510, 700).

4. The robotic arm positioning error compensation device (741-750) according to claim 3, wherein a material of the first bracket module is an invar, a super invar, a zero thermal expansion glass-ceramics or other material with a low thermal expansion coefficient.

5. The robotic arm positioning error compensation device (741-750) according to claim 2, wherein the first multi-axis robotic arm (210, 410, 510, 700) is a cuboid, a cylinder or a semi-cylinder.

6. A three-dimension positioning measurement method for laser speckle images, comprising the steps of:

> (1) emitting a first coherent light and a second coherent light;
> (2) obtaining a first laser speckle image (321) and a second laser speckle image (322), wherein the first coherent light is incident on a first surface (211, 311, 411, 511, 821, 921, 1021) of a transmission shaft and scatters to generate a first laser speckle and the first laser speckle is recorded to obtain the first laser speckle image (321), and the second coherent light is incident on a second surface (212, 312, 412, 512, 822, 922, 1022) of the transmission shaft that is perpendicular or adjacent to the first surface (211, 311, 411, 511, 821, 921, 1021) and scatters to generate a second laser speckle and the second laser speckle is recorded to obtain the second laser speckle image (322);
> (3) repeating the step (2) when the transmission shaft moves, wherein a third laser speckle image (331) is obtained according to the first laser speckle and a fourth laser speckle image (332) is obtained according to the second laser speckle, and the first laser speckle image (321) is compared with the third laser speckle image (331) to determine a shift direction and a shift distance of the first surface (211, 311, 411, 511, 821, 921, 1021), and the second laser speckle image (322) is compared with the fourth laser speckle image (332) to determine a shift direction, and a shift distance of the second surface (212, 312, 412, 512, 822, 922, 1022);

(4) repeating the step (3) to generate a laser speckle image group (541, 542, 551, 552), and generating a laser speckle image database according to the laser speckle image group (541, 542, 551, 552) and related position information of the first surface (211, 311, 411, 511, 821, 921, 1021) and the second surface (212, 312, 412, 512, 822, 922, 1022); and

(5) repeating the step (2) and comparing the first laser speckle image (321) and the second laser speckle image (322) with the laser speckle image database to obtain the related position information of the first surface (211, 311, 411, 511, 821, 921, 1021) and the second surface (212, 312, 412, 512, 822, 922, 1022) for determining the three-dimensional position of the transmission shaft and, utilizing the absolute positioning of actual motion of the laser speckle on the surface of the transmission shaft to correct positioning errors of original rotation angle parameters.

7. A robotic arm positioning error compensation device (741-750), configured to execute the three-dimensional positioning measurement method for laser speckle images according to claim 6, the robotic arm positioning error compensation device comprising:

a multi-axis robotic arm (210, 410, 510, 700);
two first light sources (221, 421);
two first image sensors (231, 431); and
a signal processing component;
wherein the-first light sources (221, 421) are configured to emit the first coherent light and the second coherent light, the first coherent light and the second coherent light being incident on the multi-axis robotic arm (210, 410, 510, 700) to generate the first laser speckles and the second laser speckles, the image sensors (231, 431), configured to record the first laser speckles and the second laser speckles to generate the first laser speckle images (321), the second laser speckle images (322), the third laser speckle images (331) and the fourth laser speckle images (332), the signal processing component configured to process the first laser speckle images (321), the second laser speckle images (322), the third laser speckle images (331) and the fourth laser speckles images (332) and to move the multi-axis robotic arm (210, 410, 510, 700) to create the laser speckle image database, and after moving the multi-axis robotic arm (210, 410, 510, 700), the signal processing component is configured to compare the first laser speckle images (321) and the second laser speckle images (322) with the laser speckle image database for determining the three-dimension position of the multi-axis robotic arm (210, 410, 510, 700).

8. The robotic arm positioning error compensation device (741-750) according to claim 7, further comprising:

a second bracket module, disposed around the multi-axis robot arm, with one end of the second bracket module provided with the first light sources (221, 421) and the first image sensors (231, 431), and the other end of the second bracket module provided with two second light sources (222, 422) and two second image sensors (232, 432),
wherein, the second light sources (222, 422) are configured to emit the first coherent light and the second coherent light, the first coherent light and the second coherent light being incident on the multi-axis robotic arm (210, 410, 510, 700) to generate the first laser speckles and the second laser speckles, the second image sensors configured to record the first laser speckles and the second laser speckles to generate the first laser speckle images (321), the second laser speckle images (322), the third laser speckle images (331) and the fourth laser speckle images (332), and the signal processing component is configured to process the first laser speckle images (321), the second laser speckle images (322), the third laser speckle images (331) and the fourth laser speckle images (332) and to move the multi-axis robotic arm (210, 410, 510, 700) to create the laser speckle image database, and after the multi-axis robotic arm (210, 410, 510) is moved, the signal processing component is configured to compare the first laser speckle images (321) and the second laser speckle images (322) with the laser speckle image database for determining the three-dimensional position of the multi-axis robotic arm (210, 410, 510, 700).

9. The robotic arm positioning error compensation device (741-750) according to claim 8, wherein a material of the second bracket module is an invar, a super invar, a zero thermal expansion glass-ceramics or other material with a low thermal expansion coefficient.

**10.** The robotic arm positioning error compensation device (741-750) according to claim 7, wherein the multi-axis robotic arm (210, 410, 510, 700) is a cuboid, a cylinder or a semi-cylinder.

**Patentansprüche**

**1.** Dreidimensionales Versatzmessverfahren für Laser-Speckle-Bilder, die Schritte umfassend:

(1) Aussenden eines ersten kohärenten Lichts und eines zweiten kohärenten Lichts;
(2) Erhalten eines ersten Laser-Speckle-Bildes und eines zweiten Laser-Speckle-Bildes, wobei das erste kohärente Licht auf eine erste Oberfläche (211, 311, 411, 511, 821, 921, 1021) einer Übertragungswelle einfällt und gestreut wird, um ein erstes Laser-Specklemuster zu erhalten, und das erste Laser-Specklemuster aufgezeichnet wird, um das erste Laser-Speckle-Bild (321) zu erhalten, und das zweite kohärente Licht auf eine zweite Oberfläche (212, 312, 412, 512, 822, 922, 1022) der Übertragungswelle einfällt, die senkrecht zu oder angrenzend an die erste Oberfläche (211, 311, 411, 511, 821, 921, 1021) ist, und gestreut wird, um ein zweites Laser-Specklemuster zu erzeugen, und das zweite Laser-Specklemuster aufgezeichnet wird, um das zweite Laser-Speckle-Bild (322) zu erhalten;
(3) Wiederholen des Schritts (2), wenn sich die Übertragungswelle bewegt, wobei ein drittes Laser-Speckle-Bild (331) gemäß dem ersten Laser-Specklemuster erhalten wird und ein viertes Laser-Speckle-Bild (332) gemäß dem zweiten Laser-Specklemuster erhalten wird, und das erste Laser-Speckle-Bild (321) mit dem dritten Laser-Speckle-Bild (331) verglichen wird, um eine Verschieberichtung und eine Verschiebedistanz der ersten Oberfläche (211, 311, 411, 511, 821, 921, 1021) zu bestimmen, und das zweite Laser-Speckle-Bild (322) mit dem vierten Laser-Speckle-Bild (332) verglichen wird, um eine Verschieberichtung und eine Verschiebedistanz der zweiten Oberfläche (212, 312, 412, 512, 822, 922, 1022) zu bestimmen; und
(4) Bestimmen eines dreidimensionalen Versatzes der Übertragungswelle durch Messen der Verschieberichtung und Verschiebedistanz der ersten Oberfläche (211, 311, 411, 511, 821, 921, 1021) der Übertragungswelle und der Verschieberichtung und Verschiebedistanz der zweiten Oberfläche (212, 312, 412, 512, 822, 922, 1022) der Übertragungswelle, und Verwenden der absoluten Positionierung der tatsächlichen Bewegung des Laser-Specklemusters auf der Oberfläche der Übertragungswelle zum Korrigieren von Positionierungsfehlern von ursprünglichen Rotationswinkelparametern.

**2.** Vorrichtung (741-750) zur Kompensation eines Positionierungsfehlers eines Roboterarms, das dafür ausgelegt ist, das dreidimensionale Versatzmessverfahren für Laser-Speckle-Bilder nach Anspruch 1 auszuführen, wobei die Vorrichtung zur Kompensation eines Positionierungsfehlers eines Roboterarms Folgendes aufweist:

einen ersten Mehrachsen-Roboterarm (210, 410, 510, 700);
zwei erste Lichtquellen (221, 421);
zwei erste Bildsensoren (231, 431); und
eine erste Signalverarbeitungskomponente;
wobei die ersten Lichtquellen (221, 421) das erste kohärente Licht und das zweite kohärente Licht aussenden, das erste kohärente Licht und zweite kohärente Licht auf den ersten Mehrachsen-Roboterarm (210, 410, 510, 700) einfallen, um die ersten Laser-Specklemuster und die zweiten Laser-Specklemuster zu erzeugen, die ersten Bildsensoren die ersten Laser-Specklemuster und zweiten Laser-Specklemuster aufzeichnen, um die ersten Laser-Speckle-Bilder (321), die zweiten Laser-Speckle-Bilder (322), die dritten Laser-Speckle-Bilder (331) und die vierten Laser-Speckle-Bilder (332) zu erzeugen, und die erste Signalverarbeitungskomponente die ersten Laser-Speckle-Bilder (321), die zweiten Laser-Speckle-Bilder (322), die dritten Laser-Speckle-Bilder (331) und die vierten Laser-Speckle-Bilder (332) verarbeitet, um den dreidimensionalen Versatz des ersten Mehrachsen-Roboterarms (210, 410, 510, 700) zu bestimmen.

**3.** Vorrichtung (741-750) zur Kompensation eines Positionierungsfehlers eines Roboterarms nach Anspruch 2, darüber hinaus aufweisend:

ein erstes Trägermodul, das um den ersten Mehrachsen-Roboterarm herum vorgesehen ist, wobei ein Ende des ersten Trägermoduls mit den ersten Lichtquellen (221, 421) und den ersten Bildsensoren (231, 431) versehen ist, und das andere Ende des ersten Trägermoduls mit zwei zweiten Lichtquellen (222, 422) und zwei zweiten Bildsensoren (232, 432) versehen ist, wobei die zweiten Lichtquellen (222, 422) das erste kohärente Licht und das zweite kohärente Licht aussenden, das erste kohärente Licht und zweite kohärente Licht auf den ersten Mehrachsen-Roboterarm (210, 410, 510, 700) einfallen, um die ersten Laser-Specklemuster und die zweiten Laser-Specklemuster zu erzeugen, die zweiten Bildsensoren (232, 432) die ersten Laser-Specklemuster und zweiten Laser-Specklemuster aufzeichnen, um die ersten Laser-Speckle-Bilder (321), die zweiten Laser-Speckle-Bilder (322), die dritten Laser-Speckle-Bilder (331) und die vierten Laser-Speckle-Bilder (332) zu erzeugen, und die erste Signalverarbeitungskomponente die ersten Laser-Speckle-Bilder (321), die zweiten Laser-Speckle-Bilder (322), die dritten Laser-Speckle-Bilder (331) und die vierten Laser-Speckle-Bilder (332) verarbeitet, um den dreidimensionalen Versatz des anderen Endes des ersten Mehrachsen-Roboterarms (210, 410, 510, 700) zu bestimmen.

4. Vorrichtung (741-750) zur Kompensation eines Positionierungsfehlers eines Roboterarms nach Anspruch 3, wobei es sich bei einem Material des ersten Trägermoduls um Invar, Superinvar, eine Glaskeramik mit Null-Wärmeausdehnung oder ein anderes Material mit einem geringen Wärmeausdehnungskoeffizienten handelt.

5. Vorrichtung (741-750) zur Kompensation eines Positionierungsfehlers eines Roboterarms nach Anspruch 2, wobei der erste Mehrachsen-Roboterarm (210, 410, 510, 700) ein Quader, ein Zylinder oder ein Halbzylinder ist.

6. Verfahren zur dreidimensionalen Positionierungsmessung für Laser-Speckle-Bilder, umfassend die Schritte:

(1) Aussenden eines ersten kohärenten Lichts und eines zweiten kohärenten Lichts;
(2) Erhalten eines ersten Laser-Speckle-Bildes (321) und eines zweiten Laser-Speckle-Bildes (322), wobei das erste kohärente Licht auf eine erste Oberfläche (211, 311, 411, 511, 821, 921, 1021) einer Übertragungswelle einfällt und gestreut wird, um ein erstes Laser-Specklemuster zu erhalten, und das erste Laser-Specklemuster aufgezeichnet wird, um das erste Laser-Speckle-Bild (321) zu erhalten, und das zweite kohärente Licht auf eine zweite Oberfläche (212, 312, 412, 512, 822, 922, 1022) der Übertragungswelle einfällt, die senkrecht zu oder angrenzend an die erste Oberfläche (211, 311, 411, 511, 821, 921, 1021) ist, und gestreut wird, um ein zweites Laser-Specklemuster zu erzeugen, und das zweite Laser-Specklemuster aufgezeichnet wird, um das zweite Laser-Speckle-Bild (322) zu erhalten;
(3) Wiederholen des Schritts (2), wenn sich die Übertragungswelle bewegt, wobei ein drittes Laser-Speckle-Bild (331) gemäß dem ersten Laser-Specklemuster erhalten wird und ein viertes Laser-Speckle-Bild (332) gemäß dem zweiten Laser-Specklemuster erhalten wird, und das erste Laser-Speckle-Bild (321) mit dem dritten Laser-Speckle-Bild (331) verglichen wird, um eine Verschieberichtung und eine Verschiebedistanz der ersten Oberfläche (211, 311, 411, 511, 821, 921, 1021) zu bestimmen, und das zweite Laser-Speckle-Bild (322) mit dem vierten Laser-Speckle-Bild (332) verglichen wird, um eine Verschieberichtung und eine Verschiebedistanz der zweiten Oberfläche (212, 312, 412, 512, 822, 922, 1022) zu bestimmen;
(4) Wiederholen des Schritts (3), um eine Laser-Speckle-Bildgruppe (541, 542, 551, 552) zu erzeugen, und einer Laser-Speckle-Bilddatenbank gemäß der Laser-Speckle-Bildgruppe (541, 542, 551, 552) und zugehörigen Positionsinformationen der ersten Oberfläche (211, 311, 411, 511, 821, 921, 1021) und zweiten Oberfläche (212, 312, 412, 512, 822, 922, 1022); und
(5) Wiederholen des Schritts (2) und Vergleichen des ersten Laser-Speckle-Bildes (321) und des zweiten Laser-Speckle-Bildes (322) mit der Laser-Speckle-Bilddatenbank, um die zugehörigen Positionsinformationen der ersten Oberfläche (211, 311, 411, 511, 821, 921, 1021) und zweiten Oberfläche (212, 312, 412, 512, 822, 922, 1022) zum Bestimmen der dreidimensionalen Position der Übertragungswelle zu erhalten, und Verwenden der absolute Positionierung der tatsächlichen Bewegung des Laser-Specklemusters auf der Oberfläche der Übertragungswelle zum Korrigieren von Positionierungsfehlern von ursprünglichen Rotationswinkelparametern.

7. Vorrichtung (741-750) zur Kompensation eines Positionierungsfehlers eines Roboterarms, die dafür ausgelegt ist, das dreidimensionale Positionierungsmessverfahren für Laser-Speckle-Bilder nach Anspruch 6 auszuführen, wobei die Vorrichtung zur Kompensation eines Positionierungsfehlers eines Roboterarms Folgendes aufweist:

einen Mehrachsen-Roboterarm (210, 410, 510, 700);
zwei erste Lichtquellen (221, 421);
zwei erste Bildsensoren (231, 431); und
eine Signalverarbeitungskomponente;
wobei die ersten Lichtquellen (221, 421) dafür ausgelegt sind, das erste kohärente Licht und das zweite kohärente Licht auszusenden, das erste kohärente Licht und zweite kohärente Licht auf den Mehrachsen-Roboterarm (210, 410, 510, 700) einfallen, um die ersten Laser-Specklemuster und die zweiten Laser-Specklemuster zu erzeugen, die Bildsensoren (231, 431) dafür ausgelegt sind, die ersten Laser-Specklemuster und zweiten Laser-Specklemuster aufzuzeichnen, um die ersten Laser-Speckle-Bilder (321), die zweiten Laser-Speckle-Bilder (322), die dritten Laser-Speckle-Bilder (331) und die vierten Laser-Speckle-Bilder (332) zu erzeugen, die Signalverarbeitungskomponente dafür ausgelegt ist, die ersten Laser-Speckle-Bilder (321), die zweiten Laser-Speckle-Bilder (322), die dritten Laser-Speckle-Bilder (331) und die vierten Laser-Speckle-Bilder (332) zu verarbeiten und den Mehrachsen-Roboterarm (210, 410, 510, 700) zu bewegen, um die Laser-Speckle-Bilddatenbank zu erstellen, und, nach dem Bewegen des Mehrachsen-Roboterarms (210, 410, 510, 700), die Signalverarbeitungskomponente dafür ausgelegt ist, die ersten Laser-Speckle-Bilder (321) und zweiten Laser-Speckle-Bilder (322) mit der Laser-Speckle-Bilddatenbank zu vergleichen, um die dreidimensionale Position des Mehrachsen-Roboterarms (210, 410, 510, 700) zu bestimmen.

8.    Vorrichtung (741-750) zur Kompensation eines Positionierungsfehlers eines Roboterarms nach Anspruch 7, darüber hinaus aufweisend:

ein zweites Trägermodul, das um den Mehrachsen-Roboterarm herum vorgesehen ist, wobei ein Ende des zweiten Trägermoduls mit den ersten Lichtquellen (221, 421) und den ersten Bildsensoren (231, 431) versehen ist, und das andere Ende des zweiten Trägermoduls mit zwei zweiten Lichtquellen (222, 422) und zwei zweiten Bildsensoren (232, 432) versehen ist, wobei die zweiten Lichtquellen (222, 422) dafür ausgelegt sind, das erste kohärente Licht und das zweite kohärente Licht auszusenden, das erste kohärente Licht und zweite kohärente Licht auf den Mehrachsen-Roboterarm (210, 410, 510, 700) einfallen, um die ersten Laser-Specklemuster und zweiten Laser-Specklemuster zu erzeugen, die zweiten Bildsensoren dafür ausgelegt sind, die ersten Laser-Specklemuster und zweiten Laser-Specklemuster aufzuzeichnen, um die ersten Laser-Speckle-Bilder (321), die zweiten Laser-Speckle-Bilder (322), die dritten Laser-Speckle-Bilder (331) und die vierten Laser-Speckle-Bilder (332) zu erzeugen, und die Signalverarbeitungskomponente dafür ausgelegt ist, die ersten Laser-Speckle-Bilder (321), die zweiten Laser-Speckle-Bilder (322), die dritten Laser-Speckle-Bilder (331) und die vierten Laser-Speckle-Bilder (332) zu verarbeiten und den Mehrachsen-Roboterarm (210, 410, 510, 700) zu bewegen, um die Laser-Speckle-Bilddatenbank zu erstellen, und, nach dem Bewegen des Mehrachsen-Roboterarms (210, 410, 510, 700), die Signalverarbeitungskomponente dafür ausgelegt ist, die ersten Laser-Speckle-Bilder (321) und zweiten Laser-Speckle-Bilder (322) mit der Laser-Speckle-Bilddatenbank zu vergleichen, um die dreidimensionale Position des Mehrachsen-Roboterarms (210, 410, 510, 700) zu bestimmen.

9.    Vorrichtung (741-750) zur Kompensation eines Positionierungsfehlers eines Roboterarms nach Anspruch 8, wobei es sich bei einem Material des zweiten Trägermoduls um Invar, Superinvar, eine Glaskeramik mit Null-Wärmeausdehnung oder ein anderes Material mit einem geringen Wärmeausdehnungskoeffizienten handelt.

10.    Vorrichtung (741-750) zur Kompensation eines Positionierungsfehlers eines Roboterarms nach Anspruch 7, wobei der Mehrachsen-Roboterarm (210, 410, 510, 700) ein Quader, ein Zylinder oder ein Halbzylinder ist.

## Revendications

1.    (Modifiée) Procédé de mesure de déplacement tridimensionnel pour les images de granulation produite par laser, comprenant les étapes consistant à :

(1) émettre une première lumière cohérente et une seconde lumière cohérente ;
(2) obtenir une première image de granulation produite par laser et une seconde image de granulation produite par laser, dans lequel la première lumière cohérente rencontre une première surface (211, 311, 411, 511, 821, 921, 1021) d'un arbre de transmission et se disperse pour générer une première granulation produite par laser et dans lequel la première granulation produite par laser est enregistrée pour obtenir la première image de granulation produite par laser (321) et dans lequel la seconde lumière cohérente rencontre une seconde surface (212, 312, 412, 512, 822, 922, 1022) de l'arbre de transmission qui est perpendiculaire ou à côté de la première surface (211, 311, 411, 511, 821, 921, 1021) et se disperse pour générer une seconde granulation produite par laser et dans lequel la seconde granulation produite par laser est enregistrée pour obtenir la seconde image de granulation produite par laser (322) ;
(3) répéter l'étape (2) lorsque l'arbre de transmission se déplace, dans lequel une troisième image de granulation produite par laser (331) est obtenue en fonction de la première granulation produite par laser et une quatrième image de granulation produite par laser (332) est obtenue en fonction de la seconde granulation produite par laser et dans lequel la première image de granulation produite par laser (321) est comparée à la troisième image de granulation produite par laser (331) pour déterminer une direction de décalage et une distance de décalage de la première surface (211, 311, 411, 511, 821, 921, 1021) et dans lequel la seconde image de granulation produite par laser (322) est comparée à la quatrième image de granulation produite par laser (332) pour déterminer une direction de décalage et une distance de décalage de la seconde surface (212, 312, 412, 512, 822, 922, 1022) ; et

(4) déterminer un déplacement tridimensionnel de l'arbre de transmission en mesurant la direction de décalage et la distance de décalage de la première surface (211, 311, 411, 511, 821, 921, 1021) de l'arbre de transmission et la direction de décalage et la distance de décalage de la seconde surface (212, 312, 412, 512, 822, 922, 1022) de l'arbre de transmission et utiliser le positionnement absolu du mouvement réel de la granulation produite par laser sur la surface de l'arbre de transmission pour corriger les erreurs de positionnement des paramètres d'angle de rotation d'origine.

2. (Modifiée) Dispositif de compensation d'erreur de positionnement de bras robotisé (741-750), pouvant être actionné par le procédé de mesure de déplacement tridimensionnel pour les images de granulation produite par laser selon la revendication 1, le dispositif de compensation d'erreur de positionnement de bras robotisé comprenant :

    un premier bras robotisé multiaxe (210, 410, 510, 700) ;
    deux premières sources lumineuses (221, 421) ;
    deux premiers capteurs d'image (231, 431) ; et
    une première composante de traitement de signal ;
    dans lequel les premières sources lumineuses (221, 421) émettent la première lumière cohérente et la seconde lumière cohérente, la première lumière cohérente et la seconde lumière cohérente rencontrant le premier bras robotisé multiaxe (210, 410, 510, 700) pour générer les premières granulations produites par laser et les secondes granulations produites par laser, les premiers capteurs d'image enregistrant les premières granulations produites par laser et les secondes granulations produites par laser pour générer les premières images de granulation produite par laser (321), les secondes images de granulation produite par laser (322), les troisièmes images de granulation produite par laser (331) et les quatrièmes images de granulation produite par laser (332) et dans lequel la première composante de traitement de signal traite les premières images de granulation produite par laser (321), les secondes images de granulation produite par laser (322), les troisièmes images de granulation produite par laser (331) et les quatrièmes images de granulation produite par laser (332) pour déterminer le déplacement tridimensionnel du premier bras robotisé multiaxe (210, 410, 510, 700).

3. (Modifiée) Dispositif de compensation d'erreur de positionnement de bras robotisé (741-750) selon la revendication 2, comprenant en outre :

    un premier module de support, disposé autour du premier bras de robot multiaxe, avec une extrémité du premier module de support pourvu des premières sources lumineuses (221, 421) et des premiers capteurs d'image (231, 431) et l'autre extrémité du premier module de support pourvue de deux secondes sources lumineuses (222, 422) et de deux seconds capteurs d'image (232, 432) ;
    dans lequel, les secondes sources lumineuses (222, 422) émettent la première lumière cohérente et la seconde lumière cohérente, la première lumière cohérente et la seconde lumière cohérente rencontrant le premier bras robotisé multiaxe (210, 410, 510, 700) pour générer les premières granulations produites par laser et les secondes granulations produites par laser, les seconds capteurs d'image (232, 432) enregistrant les premières granulations produites par laser et les secondes granulations produites par laser pour générer les premières images de granulation produite par laser (321), les secondes images de granulation produite par laser (322), les troisièmes images de granulation produite par laser (331) et les quatrièmes images de granulation produite par laser (332) et dans lequel la première composante de traitement de signal traite les premières images de granulation produite par laser (321), les secondes images de granulation produite par laser (322), les troisièmes images de granulation produite par laser (331) et les quatrièmes images de granulation produite par laser (332) pour déterminer le déplacement tridimensionnel de l'autre extrémité du premier bras robotisé multiaxe (210, 410, 510, 700).

4. (Originale) Dispositif de compensation d'erreur de positionnement de bras robotisé (741-750) selon la revendication 3, dans lequel un matériau du premier module de support est un invar, un super invar, une vitrocéramique à dilatation thermique nulle ou tout autre matériau à faible coefficient de dilatation thermique.

5. (Modifiée) Dispositif de compensation d'erreur de positionnement de bras robotisé (741~750) selon la revendication 2, dans lequel le premier bras robotisé multiaxe (210, 410, 510, 700) est un cuboïde, un cylindre ou un semi-cylindre.

**6.** (Modifiée) Procédé de mesure de positionnement tridimensionnel pour les images de granulation produite par laser, comprenant les étapes consistant à :

(1) émettre une première lumière cohérente et une seconde lumière cohérente ;

(2) obtenir une première image de granulation produite par laser (321) et une seconde image de granulation produite par laser (322), dans lequel la première lumière cohérente rencontre une première surface (211, 311, 411, 511, 821, 921, 1021) d'un arbre de transmission et se disperse pour générer une première granulation produite par laser et dans lequel la première granulation produite par laser est enregistrée pour obtenir la première image de granulation produite par laser (321) et dans lequel la seconde lumière cohérente rencontre une seconde surface (212, 312, 412, 512, 822, 922, 1022) de l'arbre de transmission qui est perpendiculaire ou à côté de la première surface (211, 311, 411, 511, 821, 921, 1021) et se disperse pour générer une seconde granulation produite par laser et dans lequel la seconde granulation produite par laser est enregistrée pour obtenir la seconde image de granulation produite par laser (322) ;

(3) répéter l'étape (2) lorsque l'arbre de transmission se déplace, dans lequel une troisième image de granulation produite par laser (331) est obtenue en fonction de la première granulation produite par laser et une quatrième image de granulation produite par laser (332) est obtenue en fonction de la seconde granulation produite par laser et dans lequel la première image de granulation produite par laser (321) est comparée à la troisième image de granulation produite par laser (331) pour déterminer une direction de décalage et une distance de décalage de la première surface (211, 311, 411, 511, 821, 921, 1021) et dans lequel la seconde image de granulation produite par laser (322) est comparée à la quatrième image de granulation produite par laser (332) pour déterminer une direction de décalage, et une distance de décalage de la seconde surface (212, 312, 412, 512, 822, 922, 1022) ;

(4) répéter l'étape (3) pour générer un groupe d'images de granulation produite par laser (541, 542, 551, 552) et générer une base de données d'images de granulation produite par laser en fonction du groupe d'images de granulation produite par laser (541, 542, 551, 552) et des informations de position associées de la première surface (211, 311, 411, 511, 821, 921, 1021) et de la seconde surface (212, 312, 412, 512, 822, 922, 1022) ; et

(5) répéter l'étape (2) et comparer la première image de granulation produite par laser (321) et la seconde image de granulation produite par laser (322) à la base de données d'images de granulation produite par laser pour obtenir les informations de position associées de la première surface (211, 311, 411, 511, 821, 921, 1021) et de la seconde surface (212, 312, 412, 512, 822, 922, 1022) pour déterminer la position tridimensionnelle de l'arbre de transmission et utiliser le positionnement absolu du mouvement réel de la granulation produite par laser sur la surface de l'arbre de transmission pour corriger les erreurs de positionnement des paramètres d'angle de rotation d'origine.

**7.** (Modifiée) Dispositif de compensation d'erreur de positionnement de bras robotisé (741-750), pouvant être actionné par le procédé de mesure de positionnement tridimensionnel pour les images de granulation produite par laser selon la revendication 6, le dispositif de compensation d'erreur de positionnement de bras robotisé comprenant :

un bras robotisé multiaxe (210, 410, 510, 700) ; deux premières sources lumineuses (221, 421) ; deux premiers capteurs d'image (231, 431) ; et une composante de traitement de signal ; dans lequel les premières sources lumineuses (221, 421) émettent la première lumière cohérente et la seconde lumière cohérente, la première lumière cohérente et la seconde lumière cohérente rencontrant le bras robotisé multiaxe (210, 410, 510, 700) pour générer les premières granulations produites par laser et les secondes granulations produites par laser, les capteurs d'image (231, 431) enregistrant les premières granulations produites par laser et les secondes granulations produites par laser pour générer les premières images de granulation produite par laser (321), les secondes images de granulation produite par laser (322), les troisièmes images de granulation produite par laser (331) et les quatrièmes images de granulation produite par laser (332), la composante de traitement de signal traite les premières images de granulation produite par laser (321), les secondes images de granulation produite par laser (322), les troisièmes images de granulation produite par laser (331) et les quatrièmes images de granulations produites par laser (332) et déplace le bras robotisé multiaxe (210, 410, 510, 700) pour créer la base de données d'images de granulation produite par laser et, après déplacement du bras robotisé multiaxe (210, 410, 510, 700), la composante de traitement de signal compare les premières images de granulation produite par laser (321) et les secondes images de granulation produite par laser (322) à la base de données d'images de granulation produite par laser pour déterminer la position tridimensionnelle du bras robotisé multiaxe (210, 410, 510, 700).

8. (Modifiée) Dispositif de compensation d'erreur de positionnement de bras robotisé (741-750) selon la revendication 7, comprenant en outre :

un seconde module de support, disposé autour du bras de robot multiaxe, avec une extrémité du second module de support pourvu des premières sources lumineuses (221, 421) et des premiers capteurs d'image (231, 431) et l'autre extrémité du second module de support pourvue de deux secondes sources lumineuses (222, 422) et de deux seconds capteurs d'image (232, 432) ;

dans lequel, les secondes sources lumineuses (222, 422) émettent la première lumière cohérente et la seconde lumière cohérente, la première lumière cohérente et la seconde lumière cohérente rencontrant le bras robotisé multiaxe (210, 410, 510, 700) pour générer les premières granulations produites par laser et les secondes granulations produites par laser, les seconds capteurs d'image enregistrant les premières granulations produites par laser et les secondes granulations produites par laser pour générer les premières images de granulation produite par laser (321), les secondes images de granulation produite par laser (322), les troisièmes images de granulation produite par laser (331) et les quatrièmes images de granulation produite par laser (332) et dans lequel la composante de traitement de signal traite les premières images de granulation produite par laser (321), les secondes images de granulation produite par laser (322), les troisièmes images de granulation produite par laser (331) et les quatrièmes images de granulation produite par laser (332) et déplace le bras robotisé multiaxe (210, 410, 510, 700) pour créer la base de données d'images de granulation produite par laser et, après déplacement du bras robotisé multiaxe (210, 410, 510), la composante de traitement de signal compare les premières images de granulation produite par laser (321) et les secondes images de granulation produite par laser (322) à la base de données d'images de granulation produite par laser pour déterminer la position tridimensionnelle du bras robotisé multiaxe (210, 410, 510, 700).

9. (Originale) Dispositif de compensation d'erreur de positionnement de bras robotisé (741-750) selon la revendication 8, dans lequel un matériau du second module de support est un invar, un super invar, une vitrocéramique à dilatation thermique nulle ou tout autre matériau à faible coefficient de dilatation thermique.

10. (Modifiée) Dispositif de compensation d'erreur de positionnement de bras robotisé (741-750) selon la revendication 7, dans lequel le bras robotisé multiaxe (210, 410, 510, 700) est un cuboïde, un cylindre ou un semi-cylindre.

```
                                                                    ┌─ S110
┌──────────────────────────────────────────────────────────────┐
│     emitting a first coherent light and a second coherent light │
└──────────────────────────────────────────────────────────────┘
                                  │
                                  ▼                                 ┌─ S120
┌──────────────────────────────────────────────────────────────┐
│    obtaining a first laser speckle image and a second laser     │
│  speckle image, wherein the first coherent light is incident    │
│    on a first surface of a working object and scatters to       │
│  generate a first laser speckle and the first laser speckle is  │
│   recorded to obtain the first laser speckle image, and the     │
│    second coherent light is incident on a second surface of     │
│  the working object that is perpendicular or adjacent to the    │
│  first surface  and scatters to generate a second laser speckle │
│   and the second laser speckle is recorded to obtain the second │
│                      laser speckle image                        │
└──────────────────────────────────────────────────────────────┘
                                  │
                                  ▼                                 ┌─ S130
┌──────────────────────────────────────────────────────────────┐
│    repeating the step (2) when the working object moves,        │
│  wherein a third laser speckle image is obtained according to   │
│   the first laser speckle and a fourth laser speckle image is   │
│  obtained according to the second laser speckle, and the first  │
│  laser speckle image is compared with the third laser speckle   │
│   image to determine a shift direction and a shift distance of  │
│    the first surface, and the second laser speckle image is     │
│  compared with the fourth laser speckle image to determine a    │
│    shift direction and a shift distance of the second surface   │
└──────────────────────────────────────────────────────────────┘
                                  │
                                  ▼                                 ┌─ S140
┌──────────────────────────────────────────────────────────────┐
│    determining a three-dimensional displacement of the          │
│   working object by measuring the shift direction and the       │
│  shift distance of the first surface of the working object and  │
│ the shift direction and the shift distance of the second surface│
│                    of the working object                        │
└──────────────────────────────────────────────────────────────┘
```

FIG. 1

FIG. 2

FIG. 3

FIG. 4

FIG. 5

S610

emitting a first coherent light and a second coherent light

S620

obtaining a first laser speckle image and a second laser speckle image , wherein the first coherent light is incident on a first surface of a working object and scatters to generate a first laser speckle and the first laser speckle is recorded to obtain the first laser speckle image, and the second coherent light is incident on a second surface of the working object that is perpendicular or adjacent to the first surface and scatters to generate a second laser speckle and the second laser speckle is recorded to obtain the second laser speckle image

S630

repeating the step (2) when the working object moves, wherein a third laser speckle image is obtained according to the first laser speckle and a fourth laser speckle image is obtained according to the second laser speckle, and the first laser speckle image is compared with the third laser speckle image to determine a shift direction and a shift distance of the first surface, and the second laser speckle image is compared with the fourth laser speckle image to determine a shift direction and a shift distance of the second surface

S640

repeating the step (3) to generate a laser speckle image group, and generating a laser speckle image database according to the laser speckle image group and related position information of the first surface and the second surface

S650

repeating the step (2) and comparing the first laser speckle image and the second laser speckle image with the laser speckle image database to obtain the related position information of the first surface and the second surface for determining the three-dimensional position of the working object

FIG. 6

FIG. 7

EP 3 611 466 B1

EP 3 611 466 B1

FIG. 8

27

FIG. 9

FIG. 10

**EP 3 611 466 B1**

## REFERENCES CITED IN THE DESCRIPTION

**Patent documents cited in the description**

- US 2018178339 A
- US 4606696 A
- US 2016110628 A
- WO 9119169 A1

**Non-patent literature cited in the description**

- **ICHIROU YAMAGUCHI et al.** LINEAR AND ROTARY ENCODERS USING ELECTRONIC SPECKLE CORRELATION. *OPTICAL ENGINEERING, SOC. OF PHOTO-OPTICAL INSTRUMENTATION ENGINEERS,* vol. 30 (12), ISSN ISSN 0091-3286, 1862-1868